# DEMANDE DE BREVET EUROPEEN

(11) **EP 4 706 849 A2**
(43) Date de publication de la demande: **11.03.2026**
(21) Numéro de dépôt: 25187411.1
(22) Date de dépôt: 03.07.2025
(51) Int. Cl.: B22F 10/50, B22F 12/20, B23K 15/00, B23K 26/342, B23K 26/70, B23K 37/00, B33Y 10/00, B33Y 40/00, B23K 9/04, B23K 26/14, B22F 10/25, B22F 10/22, B23K 37/003

(54) **DISPOSITIF DE REFROIDISSEMENT D'UN SYSTEME DE FABRICATION ADDITIVE D'UNE PIECE METALLIQUE**

(30) Priorité: 16.07.2024 FR 2407779
(71) Demandeur: Nantes Université, 44035 Nantes Cedex 1 (FR); Centre National de la Recherche Scientifique, 75016 Paris (FR)
(72) Inventeur: BERTRAND, Emmanuel, 44210 Vertou (FR); COUTURIER, Laurent, 44440 Trans-Sur-Erdre (FR); PAILLARD, Pascal, 44850 Ligné (FR); DAHERON, Paul, 44000 Nantes (FR)
(74) Mandataire: Novagraaf Technologies

(57) **Abrégé**

La présente invention a pour objet un dispositif de refroidissement (20) d'un système (10) de fabrication additive d'une pièce métallique (11) par superposition de cordons métalliques (12) en fusion sur un substrat (14),
le dispositif de refroidissement (20) comprenant au moins un refroidisseur (22) mobile,
le refroidisseur (20) intégrant au moins en partie un circuit de refroidissement (24) du dispositif de refroidissement (20), le circuit de refroidissement (24) étant parcouru par un fluide de refroidissement,
le refroidisseur (20) comprenant au moins une paroi configurée pour être en regard des cordons métalliques (12) superposés sur le substrat (14),
le dispositif de refroidissement (24) comprenant au moins un insert métallique (26) qui couvre au moins une partie de la paroi du refroidisseur (22),
l'insert métallique (26) étant fait dans un métal dont le point de fusion est inférieur à 700°C.

## Description

### Domaine technique de l'invention

La présente invention concerne un dispositif de refroidissement pour un système de fabrication additive d'une pièce métallique par superposition de cordons métalliques en fusion.

### Arrière-plan technique

Lors de la fabrication additive de pièces métalliques, des cordons métalliques en fusion sont superposés les uns sur les autres sur un substrat jusqu'à formation de la pièce désirée. Le dépôt des cordons métalliques en fusion est donc accompagné d'un apport de chaleur conséquent.

Afin de maintenir une bonne stabilité géométrique des cordons métalliques qui sont empilés, la chaleur apportée par leur dépôt doit être évacuée au moins en partie dans le temps dit inter-passe, c'est-à-dire le temps entre chaque dépôt d'un cordon métallique ou d'un ensemble de cordons métalliques.

Plusieurs moyens d'évacuation de la chaleur ont déjà été proposés dans l'art antérieur. Par exemple, on peut prévoir que le ou les cordon(s) métallique(s) soi(en)t refroidis uniquement par contact avec l'atmosphère mais ce type de refroidissement demande un temps inter-passe important. D'autres solutions proposent un refroidissement des cordons métalliques par conduction thermique avec le substrat sur lequel ils sont superposés.

Cependant, ces moyens de refroidissement de l'art antérieur ne sont pas optimaux en ce qu'ils s'accompagnent d'un temps inter-passe élevé et/ou d'une efficacité de refroidissement qui diminue au fur et à mesure que les cordons métalliques s'éloignent du substrat.

De plus, il est à considérer que la superposition des cordons métalliques forme une structure dont les surfaces périphériques sont irrégulières.

Le but de l'invention est donc de proposer un dispositif de refroidissement d'un système de fabrication additive qui permet d'améliorer le refroidissement des cordons métalliques au fur et à mesure de leur superposition de telle sorte à réduire le temps inter-passe.

### Résumé de l'invention

L'invention propose un dispositif de refroidissement d'un système de fabrication additive d'une pièce métallique par superposition de cordons métalliques en fusion sur un substrat selon une direction de superposition,
le dispositif de refroidissement comprenant au moins un refroidisseur mobile au moins selon une direction perpendiculaire à la direction de superposition des cordons métalliques en fusion sur le substrat,
le refroidisseur intégrant au moins en partie un circuit de refroidissement du dispositif de refroidissement, le circuit de refroidissement étant parcouru par un fluide de refroidissement,
le refroidisseur comprenant au moins une paroi configurée pour être en regard des cordons métalliques superposés sur le substrat,
le dispositif de refroidissement comprenant au moins un insert métallique qui couvre au moins une partie de la paroi du refroidisseur,
l'insert métallique étant fait dans un métal dont le point de fusion est inférieur à 700°C.

Selon d'autres caractéristiques de l'invention :
- l'insert métallique est composé d'étain ou de zinc ;
- le refroidisseur est une plaque de cuivre ;
- le refroidisseur est mobile au moins selon une direction perpendiculaire à la direction de superposition des cordons métalliques sur le substrat ;
- le substrat ou le refroidisseur est mobile selon une direction parallèle à la direction de superposition ;
- l'insert métallique comprend une épaisseur comprise entre 1mm et 30mm.

L'invention porte également sur un système de fabrication additive d'une pièce métallique par superposition de cordons métalliques en fusion sur un substrat, le système de fabrication additive comprenant au moins un dispositif d'apport de métal en fusion de telle sorte à former les cordons métalliques en superposition sur le substrat selon une direction de superposition et le système de fabrication additive comprenant au moins un dispositif de refroidissement selon l'une quelconque des caractéristiques précédentes.

L'invention porte également sur un procédé de fabrication additive d'une pièce métallique sur un substrat au moyen d'un système de fabrication additive selon la caractéristique précédente, le procédé de fabrication comprenant au moins :
- une étape de dépôt d'au moins un cordon métallique en fusion sur le substrat au moyen du dispositif d'apport,
- une étape de positionnement, au cours de laquelle le refroidisseur du dispositif de refroidissement est disposé en regard d'au moins un cordon métallique en fusion déposé lors de l'étape de dépôt,
- une étape de refroidissement au cours de laquelle le refroidisseur est déplacé perpendiculairement à la direction de superposition des cordons métalliques et de telle sorte à presser l'insert métallique contre au moins un cordon métallique déposé lors de l'étape de dépôt, de manière qu'au contact d'au moins un cordon métallique, l'insert métallique se ramollisse sous l'effet de l'augmentation de sa température par conduction thermique et épouse ainsi les contours dudit cordon métallique.

Selon une caractéristique du procédé, à l'issue de l'étape de refroidissement, une étape de remplacement de l'insert métallique est mise en œuvre au cours de laquelle l'insert métallique ramollit et déformé lors de l'étape de refroidissement est désolidarisé du refroidisseur et est remplacé par un nouvel insert métallique.

Selon une caractéristique du procédé, à l'issue de l'étape de remplacement, l'étape de dépôt, l'étape de positionnement et l'étape de refroidissement sont à nouveau mises en œuvre jusqu'à obtention de la pièce métallique.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1a] est une vue schématique d'une étape de dépôt d'un procédé de fabrication additive d'une pièce métallique au moyen d'un système de fabrication additive comprenant un dispositif d'apport d'un métal en fusion et un dispositif de refroidissement ;
[Fig. 1b] est une vue schématique des cordons métalliques formés par le dispositif d'apport à l'issue de l'étape de dépôt ;
[Fig.1c] est une vue schématique d'une étape de refroidissement du procédé de fabrication additive mise en œuvre au moyen du dispositif de refroidissement du système de fabrication additive ;
[Fig.1d] est une vue schématique du dispositif de refroidissement à l'issue de l'étape de refroidissement de la [Fig.1c] ;
[Fig.1e] est une vue schématique d'une nouvelle étape de dépôt et de positionnement du dispositif de refroidissement du système de fabrication additive ;
[Fig.1f] est une vue schématique de la pièce métallique fabriquée à l'issue du procédé de fabrication additive ;
[Fig.2] est un diagramme illustrant les étapes du procédé de fabrication additive de la pièce métallique.

### Description détaillée de l'invention

Dans la description qui va suivre, des éléments identiques, similaires ou analogues seront désignés par les mêmes chiffres de référence.

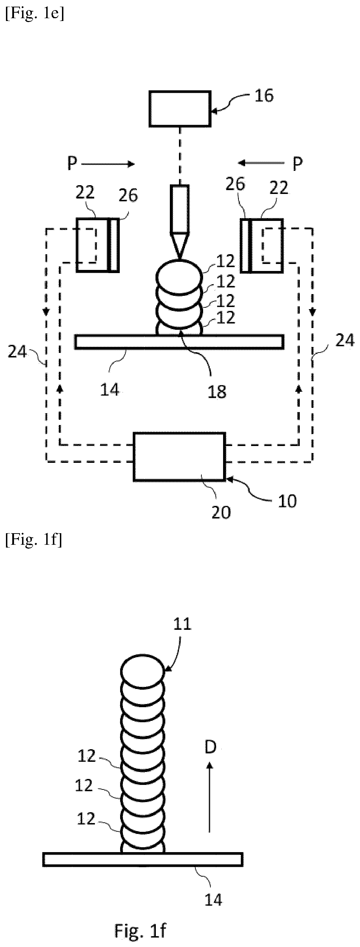

Les figures la-le illustrent de manière schématique un exemple d'un système 10 de fabrication additive d'une pièce métallique 11, visible à la [Fig.1f], par superposition de cordons métalliques 12 en fusion sur un substrat 14.

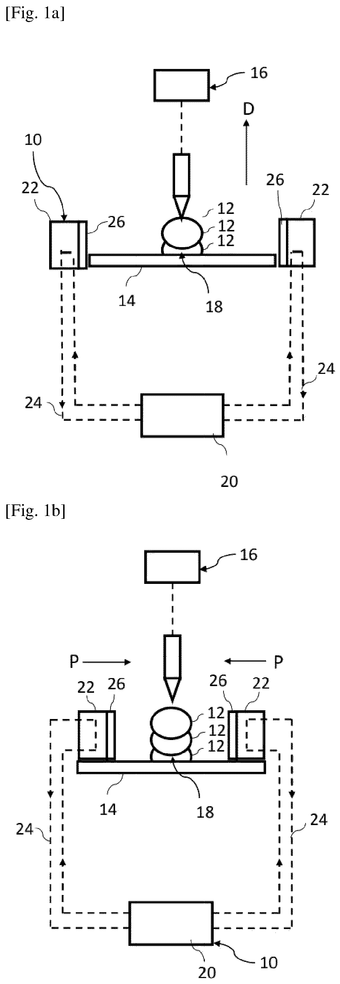

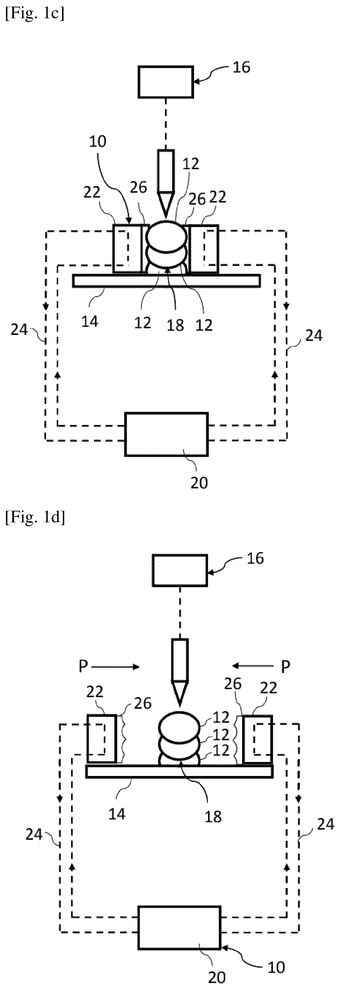

De manière plus précise, le système 10 de la figure 1 permet la réalisation de pièces métalliques 11 par superposition de cordons métalliques 12 sur le substrat 14, ici un substrat métallique.

Selon des exemples non limitatifs, le métal utilisé pour former les cordons métalliques 12 peut être composé de titane ou de nickel ou d'un alliage de différents métaux comprenant du titane et/ou du nickel.

Il convient de considérer que tout autre métal que le titane et/ou le nickel pourrait être utilisé sans sortir du cadre de l'invention, tant que le métal ou alliage de métaux utilisé est apte à être utilisé dans le cadre de la fabrication additive.

Le système 10 de fabrication représenté aux figures la-le comprend un dispositif d'apport 16 du métal ou d'alliage de métaux en fusion sur le substrat 14 de telle sorte à former les cordons métalliques 12 en superposition selon une direction de superposition D, correspondant ici à une direction verticale.

Selon un exemple non limitatif, le dispositif d'apport 16 est une torche à souder et le métal apporté se présente sous la forme de fil.

Le dispositif d'apport 16 permet par exemple de déposer le métal lorsqu'il est en fusion, c'est-à-dire par exemple pour le titane à une température supérieure à 1600°C.

Le dispositif d'apport 16 peut être fixe ou mobile par rapport au substrat 14.

Il convient par ailleurs de considérer que le substrat 14, ici représenté aux figures 1a-1f dans un plan horizontal, pourrait s'étendre de manière non limitative dans un plan vertical ou dans un plan incliné par rapport à des plans vertical et horizontal sans que cette disposition du substrat ne sorte du cadre de l'invention.

Une fois déposés par le dispositif d'apport 16, les cordons métalliques 12 refroidissent en partie par diffusion de chaleur.

Ainsi et selon un exemple non limitatif, suite au dépôt de métal ou d'alliage de métaux par le dispositif d'apport 16, la pièce fabriquée par les cordons métalliques 12 présente une température comprise entre 0°C et 600°C.

Dit autrement, les cordons métalliques 12, lorsqu'ils sont déposés par le dispositif d'apport 16, présente une température comprise entre 0°C et 600°C.

Tel que visible aux figures la-le, la superposition des cordons métalliques 12 les uns sur les autres forme une structure intermédiaire 18 aux contours irréguliers.

On entend par structure intermédiaire 18 une structure formée par les cordons métalliques 12 superposés sur le substrat 14 mais ne formant pas encore la pièce métallique 11 finale désirée.

Ainsi, les contours de la structure intermédiaire 18 formée par la superposition des cordons métalliques 12 présentent une forme irrégulière, c'est-à-dire une surface qui n'est pas plane.

Par ailleurs, il convient de considérer que la disposition du substrat 14 et des cordons métalliques 12 telle que présentée dans les figures 1a-1f est un exemple non limitatif de l'invention. Par exemple il peut être prévu que le substrat 14 s'étende dans un plan sensiblement vertical et que les cordons métalliques 12 soient superposés les uns sur les autres selon une direction verticale V, c'est-à-dire contre un pan vertical du substrat 14.

Tel que visible aux figures la-le, le système 10 de fabrication additive comprend un dispositif de refroidissement 20.

Le dispositif de refroidissement 20 du système 10 de fabrication additive a pour fonction de refroidir au moins un des cordons métalliques 12 à l'issu de sa dépose par le dispositif d'apport 16 mentionné précédemment.

Dans la suite de la description détaillée, on identifiera sous le terme de cordon(s) métallique(s) 12 déposé(s), le ou les dernier(s) cordon(s) métallique(s) déposé(s) par le dispositif d'apport 16 lors d'un procédé de fabrication additive de la pièce métallique 11.

Le dispositif de refroidissement 20 comprend au moins un refroidisseur 22.

Selon un exemple non limitatif de l'invention, le refroidisseur 20 est configuré pour se déplacer au moins perpendiculairement à la direction de superposition D des cordons métalliques 12.

Dit autrement, le refroidisseur 20 est configuré pour se déplacer par rapport aux cordons métalliques 12 au moins de telle sorte à être positionné à leur contact.

Selon un exemple non limitatif, le refroidisseur 20 est apte à se déplacer parallèlement à la direction de superposition D des cordons métalliques 12 sur le substrat 14.

On comprend donc que, selon cet exemple non limitatif, le refroidisseur 20 se déplace selon la direction de superposition D des cordons métalliques 12 au fur et à mesure du dépôt desdits cordons métalliques 12 et de telle sorte que le refroidisseur 20 s'étend en regard de chacun du ou des cordons(s) métallique(s) 12 déposé(s).

Selon un autre exemple non limitatif, le substrat 14 est apte à se déplacer parallèlement à la direction de superposition D des cordons métalliques 12 sur le substrat 14.

On comprend donc que, selon cet exemple non limitatif, le substrat 14 se déplace selon la direction de superposition D des cordons métalliques 12 au fur et à mesure du dépôt desdits cordons métalliques 12 et de telle sorte que le refroidisseur 22 s'étend en regard de chacun du ou des cordons(s) métallique(s) 12 déposé(s).

Ainsi, on comprend que le système 10 de fabrication additive est configuré de telle sorte que le refroidisseur 20 se trouve toujours en regard du ou des derniers cordon(s) métallique(s) 20 déposé(s).

Selon l'exemple de l'invention illustré, le refroidisseur 22 du dispositif de refroidissement 20 prend la forme d'une plaque métallique.

Ici et de manière non limitative le refroidisseur 22 est une plaque de cuivre.

On tire avantage du refroidisseur 22 sous forme de plaque de cuivre en ce que le cuivre présente une conductivité thermique élevée.

Le dispositif de refroidissement 20 comprend également un circuit de refroidissement 24 parcouru par un fluide réfrigérant, par exemple un fluide caloporteur comme par exemple de l'eau.

Ainsi, le refroidisseur 22 intègre au moins en partie le circuit de refroidissement 24.

Notamment, le circuit de refroidissement 24 comprend des canaux de circulation du fluide réfrigérant, les canaux de circulation étant reliés fluidiquement à au moins un réservoir de fluide réfrigérant, ici non visible.

Ainsi, l'au moins une plaque de cuivre formant le refroidisseur 22 intègre au moins une partie des canaux de circulation du circuit de refroidissement 24.

On comprend donc que le circuit de refroidissement 24 est configuré de telle sorte qu'il s'étend au moins en partie dans une épaisseur du refroidisseur 22 sous forme de plaque de cuivre.

Ainsi, la circulation du fluide réfrigérant au sein du refroidisseur 22, combinée à la forte conductivité thermique du refroidisseur 22, permet de refroidir un élément au contact du refroidisseur 22 par transfert de calories vers le liquide de refroidissement.

Le dispositif de refroidissement 20 comprend par ailleurs au moins un insert métallique 26 qui couvre au moins une partie du refroidisseur 22.

Plus particulièrement, le refroidisseur 22 comprend au moins une paroi, par exemple plane, configurée pour être en regard des cordons métalliques 12 superposés sur le substrat 14, l'insert métallique 26 recouvrant au moins une partie de la paroi plane, via un assemblage mécanique démontable.

On comprend alors que l'insert métallique 26 s'étend en regard des cordons métalliques 12 en fusion lorsque ceux-ci sont déposés par le dispositif d'apport 16 sur le substrat 14 tel que décrit précédemment.

L'insert métallique 26 est fait dans un métal mou dont le point de fusion est inférieur à 700°C.

A titre d'exemple non limitatif, l'insert métallique 26 est fait en étain ou en zinc.

L'insert métallique 26 présente par ailleurs une épaisseur comprise entre 1mm et 30 mm, considérant une direction perpendiculaire à la direction de superposition D des cordons métalliques 12.

Par ailleurs, on comprend que le déplacement du refroidisseur 22 selon une direction perpendiculaire à la direction de superposition D et vers les cordons métalliques 12, dit sens de pressage P, permet à l'insert métallique 26 porté par le refroidisseur 22 de venir au contact avec au moins un des cordons métalliques 12 en fusion déposé par le dispositif d'apport 16.

Par exemple, le refroidisseur 22 et l'insert métallique 26 présentent un dimensionnement permettant leur contact avec au moins un des cordons métalliques 12.

On comprend par ailleurs que suivant les dimensions des cordons métalliques 12 déposés par le dispositif d'apport 16, le refroidisseur 22 et l'insert métallique 26 peuvent être au contact de plus ou moins de cordons métalliques 12.

Selon l'exemple illustré et de manière non limitative, le refroidisseur 22 et l'insert métallique 26 sont configurés pour être au contact de trois cordons métalliques 12 superposés les uns sur les autres.

Il convient de considérer que le dispositif de refroidissement 20 peut comprendre plus d'un refroidisseur 22 couplé à un insert métallique 26.

Par exemple, deux ou trois refroidisseurs 22 chacun couplé à un insert métallique 26 tel que décrit précédemment peuvent être utilisés lorsque la pièce métallique fabriquée présente des dimensions importantes, par exemple avec une surface périphérique à refroidir importante.

Ainsi, on peut prévoir comme cela est illustré aux figures la-le, que le dispositif de refroidissement 20 comprend deux refroidisseurs 22 portant chacun un insert métallique 26 et étant disposés de part et d'autre des cordons métalliques 12 afin d'améliorer le refroidissement desdits cordons métalliques 12.

Le dispositif de refroidissement 20 est configuré de telle sorte que le refroidisseur 22 portant l'insert métallique 26 soit pressé contre les cordons métalliques 12 selon une pression, par exemple équivalente à 500 MPa.

Le contact en pression de l'insert métallique 26 contre les cordons métalliques 12, dont la température est comprise entre 0°C et 600°C, a alors pour effet de réchauffer l'insert métallique 26, provoquant ainsi son ramollissement lorsqu'il se rapproche de son point de fusion.

Ainsi, en ramollissant, l'insert métallique 28 épouse la forme irrégulière des contours de la pièce intermédiaire 18 formée par les cordons métalliques 12 permettant ainsi d'augmenter la surface de contact avec les cordons métalliques 12, augmentant de fait les performances de conduction thermique.

De la sorte, l'augmentation de la surface de contact entre l'insert métallique 12 et les cordons métalliques 28 permet d'améliorer le refroidissement des cordons métalliques par augmentation du transfert des calories vers le circuit de refroidissement 24 intégré dans le refroidisseur 22.

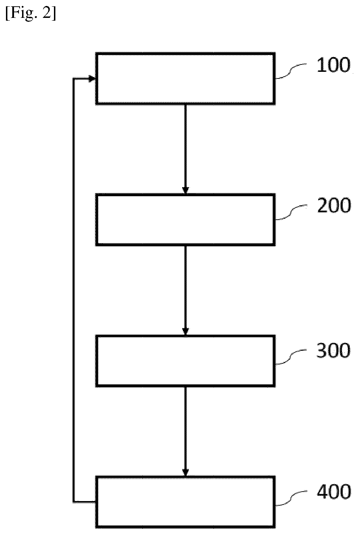

Le procédé de fabrication additive de la pièce métallique 11 sur le substrat 14 au moyen du système 10 de fabrication additive va maintenant être décrit en rapport avec la [Fig.2].

On considère à titre d'exemple que la pièce métallique 11 à fabriquer, visible à la [Fig.1f], est de forme allongée selon une direction parallèle à la direction de superposition D des cordons métalliques 12.

Il convient par ailleurs de considérer que le procédé de fabrication va être décrit avec un dispositif de refroidissement 20 comprenant un seul refroidisseur 22 couplé à un insert métallique 26, mais que le procédé s'applique *mutatis mutandis* à un dispositif de refroidissement 20 comprenant plus d'un refroidisseur 22, couplé à un insert métallique 26, par exemple deux refroidisseurs 22.

Le procédé comprend une étape de dépôt 100, visible à la [Fig.1a], d'au moins un cordon métallique 12 en fusion sur le substrat 14 au moyen du dispositif d'apport 16.

Par exemple, l'étape de dépôt 100 peut consister au dépôt successif de trois cordons métalliques 12 en fusion superposés les uns sur les autres selon la direction de superposition D.

Une fois l'étape de dépôt 100 réalisée telle que visible à la [Fig.1b], c'est-à-dire dans l'exemple présenté, une fois la superposition de trois cordons métalliques 12 en fusion déposés, une étape de positionnement 200 est mise en œuvre.

L'étape de positionnement 200 consiste entre autres au positionnement du refroidisseur 22 par rapport aux trois cordons métalliques 12 déposés lors de l'étape de dépôt 100 précédente.

Ainsi, durant l'étape de positionnement 200, le substrat 14 ou le refroidisseur 22 est déplacé selon une direction parallèle à la direction de superposition D, de telle sorte que le refroidisseur 22 s'étende en regard des cordons métalliques 12 déposés lors de l'étape de dépôt 100.

Dit autrement, durant l'étape de positionnement 200, le refroidisseur 22 est positionné de telle sorte que l'insert métallique 26 s'étende en regard au moins des trois cordons métalliques 12 déposés lors de l'étape de dépôt 100 précédente.

Dans l'exemple illustré de l'invention, le substrat 14 est mobile selon une direction parallèle à la direction de superposition D, de telle sorte à positionner les refroidisseurs 22 en regard des trois cordons métalliques 12, tel que visible à la [Fig.1b].

Selon un exemple de l'invention, l'étape de dépôt et l'étape de positionnement peuvent être mises en œuvre de manière simultanée.

Une fois le refroidisseur 22, et notamment l'insert métallique 26 disposé en regard des trois cordons métalliques 12 déposés lors de l'étape de dépôt 100 précédente, une étape de refroidissement 300 est mise en œuvre, telle que visible à la [Fig.1c].

Lors de l'étape de refroidissement 300, le refroidisseur 22 est déplacé selon le sens de pressage P vers les cordons métalliques 12 déposés précédemment.

On comprend alors que lors de l'étape de refroidissement 300, l'insert métallique 26 est pressé contre les trois cordons métalliques 12, par exemple à une pression de 500 MPa.

Ainsi, le contact entre la surface externe des cordons métalliques 12 en fusion avec l'insert métallique 26 a pour effet d'augmenter la température de ce dernier, qui par cette augmentation de sa température, se ramollit tel qu'évoqué précédemment.

Ainsi, le contact avec les cordons métalliques 12 en fusion à une température comprise entre 0 et 600°C permet d'augmenter la température de l'insert métallique 26 jusqu'à se rapprocher au moins de son point de fusion.

Tel qu'évoqué précédemment, la déformation de l'insert métallique 26 permet d'augmenter la surface de contact avec les contours irréguliers de la structure intermédiaire 18 formée par les cordons métalliques 12.

L'augmentation de la surface de contact permet ainsi d'améliorer le transfert de calories par conduction thermique, des cordons métalliques 12 vers le circuit de refroidissement 24.

Selon un exemple non limitatif, l'étape de refroidissement 300 est achevée lorsque les cordons métalliques 12 en contact avec l'insert métallique 26 présentent une diminution de leur température périphérique comprise entre 100°C et 500°C par rapport à leur température périphérique lors de leur dépose par le dispositif d'apport 16, durant l'étape de dépôt 100 précédente.

Une fois l'étape de refroidissement 300 achevée, une étape de remplacement 400 de l'insert métallique 26 est mise en œuvre au cours de laquelle l'insert métallique 26 déformé à l'issue de l'étape de refroidissement est désolidarisée du refroidisseur 22 par démontage de l'assemblage mécanique.

Pour ce faire, une fois l'étape de refroidissement 300 achevée, le refroidisseur 22 est déplacé perpendiculairement à la direction de superposition D et à l'opposé des cordons métalliques 12 de telle sorte à rendre accessible l'insert métallique 26, tel que visible à la [Fig.1d].

Une fois accessible, l'insert métallique 26 est désolidarisé du refroidisseur 22 et est remplacé par un nouvel insert métallique 26 non déformé tel que visible à la [Fig.1e].

A l'issue de l'étape de remplacement 400, l'étape de dépôt 100 peut à nouveau être mise en œuvre suivant ce qui a été décrit ci-dessus et tel que visible à la [Fig.1e].

On comprend alors que le procédé de fabrication met en œuvre de manière successive les étapes précédemment décrites, de l'étape de dépôt 100 à l'étape de remplacement 400 jusqu'à obtention de la pièce métallique 11 désirée et visible à la [Fig.1f].

Ainsi, on tire avantage du dispositif de refroidissement et du procédé de fabrication additive décrits, en ce que l'insert métallique permet, par son bas point de fusion, de ramollir au contact d'au moins un des cordons métalliques et ainsi, de palier aux incertitudes sur les lieux d'échange thermique entre le contour irrégulier des cordons métalliques et l'insert métallique.

Dit autrement, l'insert métallique tel que décrit permet d'optimiser le contact avec les cordons métalliques, maximisant ainsi leur refroidissement par conduction thermique et permet ainsi de réduire le temps inter-passe entre chaque étape de dépôt.

## Revendications

1. Dispositif de refroidissement (20) d'un système (10) de fabrication additive d'une pièce métallique (11) par superposition de cordons métalliques (12) en fusion sur un substrat (14) selon une direction de superposition (D),
le dispositif de refroidissement (20) comprenant au moins un refroidisseur (22) mobile au moins selon une direction perpendiculaire à la direction de superposition (D) des cordons métalliques (12) en fusion sur le substrat (14),
le refroidisseur (20) intégrant au moins en partie un circuit de refroidissement (24) du dispositif de refroidissement (20), le circuit de refroidissement (24) étant parcouru par un fluide de refroidissement,
le refroidisseur (20) comprenant au moins une paroi configurée pour être en regard des cordons métalliques (12) superposés sur le substrat (14),
le dispositif de refroidissement (24) comprenant au moins un insert métallique (26) qui couvre au moins une partie de la paroi du refroidisseur (22) via un assemblage mécanique démontable,
l'insert métallique (26) étant fait dans un métal dont le point de fusion est inférieur à 700°C.

2. Dispositif de refroidissement (20) selon la revendication précédente, dans lequel l'insert métallique (26) est composé d'étain ou de zinc.

3. Dispositif de refroidissement (20) selon l'une quelconque des revendications précédentes, dans lequel le refroidisseur (22) est une plaque de cuivre.

4. Dispositif de refroidissement (20) selon l'une quelconque des revendications précédentes, dans lequel le refroidisseur (22) est mobile au moins selon une direction perpendiculaire à la direction de superposition (D) des cordons métalliques (12) sur le substrat (14).

5. Dispositif de refroidissement (20) selon l'une quelconque des revendications précédentes, dans lequel le substrat (14) ou le refroidisseur (22) est mobile selon une direction parallèle à la direction de superposition (D).

6. Dispositif de refroidissement (20) selon l'une quelconque des revendications précédentes, dans lequel l'insert métallique (26) comprend une épaisseur comprise entre 1mm et 30mm.

7. Système (10) de fabrication additive d'une pièce métallique (11) par superposition de cordons métalliques (12) en fusion sur un substrat (14), le système (10) de fabrication additive comprenant au moins un dispositif d'apport (16) de métal en fusion de telle sorte à former les cordons métalliques (12) en superposition sur le substrat (14) selon une direction de superposition (D) et le système (10) de fabrication additive comprenant au moins un dispositif de refroidissement (20) selon l'une quelconque des revendications précédentes.

8. Procédé de fabrication additive d'une pièce métallique (11) sur un substrat (14) au moyen d'un système (10) de fabrication additive selon la revendication 7, le procédé de fabrication comprenant au moins :
- une étape de dépôt (100) d'au moins un cordon métallique (12) en fusion sur le substrat (14) au moyen du dispositif d'apport (16),
- une étape de positionnement (200), au cours de laquelle le refroidisseur (22) du dispositif de refroidissement (20) est disposé en regard d'au moins un cordon métallique (12) en fusion déposé lors de l'étape de dépôt (100),
- une étape de refroidissement (300) au cours de laquelle le refroidisseur (22) est déplacé perpendiculairement à la direction de superposition (D) des cordons métalliques (12) et de telle sorte à presser l'insert métallique (26) contre au moins un cordon métallique (12) déposé lors de l'étape de dépôt (100), de manière qu'au contact d'au moins un cordon métallique (12), l'insert métallique (26) se ramollisse sous l'effet de l'augmentation de sa température par conduction thermique et épouse ainsi les contours dudit cordon métallique (12).

9. Procédé selon la revendication précédente, dans lequel à l'issue de l'étape de refroidissement (300), une étape de remplacement (400) de l'insert métallique (26) est mise en œuvre au cours de laquelle l'insert métallique (26) ramollit et déformé lors de l'étape de refroidissement (300) est désolidarisé du refroidisseur (22) et est remplacé par un nouvel insert métallique (26).

10. Procédé selon la revendication précédente, dans lequel à l'issue de l'étape de remplacement (400), l'étape de dépôt (100), l'étape de positionnement (200) et l'étape de refroidissement (300) sont à nouveau mises en œuvre jusqu'à obtention de la pièce métallique (11).
